(19) Europäisches Patentamt
European Patent Office
Office européen des brevets

(11) **EP 2 746 551 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(51) Int Cl.:
*F01N 3/20* (2006.01)   *F01N 13/08* (2010.01)
*B61C 5/04* (2006.01)

(21) Anmeldenummer: **13194805.1**

(22) Anmeldetag: **28.11.2013**

(54) **Abgasrohrleitungssystem für ein Schienenfahrzeug**

Exhaust gas pipe system for a rail vehicle

Système de conduite de gaz d'échappement pour un véhicule sur rail

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2012 DE 102012024800**

(43) Veröffentlichungstag der Anmeldung:
**25.06.2014 Patentblatt 2014/26**

(73) Patentinhaber: **Bombardier Transportation GmbH**
**10785 Berlin (DE)**

(72) Erfinder:
• **Trommeshauser, Wolfgang**
**16515 Oranienburg (DE)**
• **Peukert, Karsten**
**16515 Oranienburg (DE)**
• **Jahn, Steffen**
**16761 Hennigsdorf (DE)**
• **Weise, Marco**
**12683 Berlin (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
EP-A2- 2 119 881      DE-A1-102008 063 515
DE-A1-102009 010 423    DE-A1-102010 062 755
US-A- 2 784 549

**Beschreibung**

Die vorliegende Erfindung betrifft ein Abgasrohrleitungssystem für ein Schienenfahrzeug gemäß Oberbegriff von Patentanspruch 1. Ein entsprechendes Abgasrohrleitungssystem ist beispielsweise bekannt aus der DE 10 2010 062 755 A1.

Bei Schienenfahrzeugen - aber auch bei anderen Fahrzeugen - sind neben Kraftstoff verbrauchenden Hauptbetriebseinheiten, wie Antriebsmotoren oder dergleichen, auch Kraftstoff verbrauchende Hilfsbetriebseinheiten, wie beispielsweise Fahrzeugzusatzheizungen oder dergleichen vorhanden. Ein beispielhaftes Schienenfahrzeug mit zumindest einer Hauptbetriebseinheit und zumindest einer Hilfsbetriebseinheit ist aus der deutschen Offenlegungsschrift DE 10 2006 017 123 A1 bekannt.

Sowohl die Hauptbetriebseinheiten als auch die Hilfsbetriebseinheiten produzieren bei der Verbrennung von Kraftstoff Abgase, die an die Umgebung, also nach Außen, abgeführt werden müssen. Hierzu ist in der Regel ein Abgasrohrleitungssystem vorhanden, welches separate Abgasrohre zur Abführung der von den jeweiligen Betriebseinheiten erzeugten Abgase umfasst.

So können die Hauptbetriebseinheiten zumindest ein Hauptbetriebsabgasrohr aufweisen, welches die von der Hauptbetriebseinheit erzeugten Abgase an die Umgebung abführt. Die Anordnung des Hauptbetriebsabgasrohrs in dem Fahrzeug, insbesondere die Anordnung des Endabschnitts des Hauptbetriebsabgasrohrs, welches die Abgasauslassöffnung aufweist, kann in beliebiger Weise erfolgen. Beispielsweise können die Abgase über das Dach, die Seitenwände und/oder dem Unterflurbereich des Fahrzeugs abgeführt werden. Hierbei werden an die Anordnung der Abgasauslassöffnung aufgrund der hohen Leistung der Hauptbetriebseinheiten und der damit verbundenen hohen kinetischen Energie der erzeugten Abgase keine besonderen Anforderungen gestellt.

Problematischer ist jedoch die Abgasabführung bei den Hilfsbetriebseinheiten. Hierfür kann zumindest ein mit einer Hilfsbetriebseinheit verbundenes separates Hilfsbetriebsabgasrohr vorgesehen sein, welches die Abgase nach außen abführt. Ein Endabschnitt des Hilfsbetriebsabgasrohrs, welcher die Abgasauslassöffnung aufweist, kann bevorzugt auf dem Dach oder dem Unterflurbereich angeordnet werden.

Abgasrohrleitungssysteme für Hilfsbetriebseinheiten gemäß dem Stand der Technik weisen den Nachteil auf, dass die Betriebszuverlässigkeit einer Hilfsbetriebseinheit, wie einem Heizbrenner, nicht ausreichend gesichert werden kann. Grund hierfür ist die von der Fahrzeuggeschwindigkeit abhängige Fahrtluftumströmung an der Abgasauslassöffnung am Ende des Endabschnitts des Hilfsbetriebsabgasrohrs. Beispielsweise können in Abhängigkeit der Fahrzeuggeschwindigkeit am Fahrzeug unterschiedliche Bereiche mit partieller Über- oder Unterdruckausbildung entstehen. Dies führt dazu, dass bei bestimmten Geschwindigkeitsbereichen die Betriebszuverlässigkeit einer Hilfsbetriebseinheit nicht ausreichend sichergestellt werden kann, da der Abgasgegendruck an der Abgasauslassöffnung eine ausreichende Abführung der Abgase verhindert. Denn im Gegensatz zur hohen kinetischen Energie der Abgase der Hauptbetriebseinheiten weisen die Abgase einer Hilfsbetriebseinheit aufgrund der im Allgemeinen deutlich geringeren Leistung der Hilfsbetriebseinheit eine geringe kinetische Energie auf, so dass schon bei geringen Abgasgegendrücken die Betriebssicherheit einer Hilfsbetriebseinheit nicht ausreichend gesichert werden kann.

Im Stand der Technik wird zur Lösung des Problems einerseits versucht, die Abgasauslassöffnung des Hilfsbetriebsabgasrohrs derart anzuordnen, dass der Einfluss der im Fahrbetrieb entstehenden geschwindigkeitsabhängigen Strömungsverhältnisse auf den Betrieb der Hilfsbetriebseinheiten möglichst gering ist. Beispielsweise kann die Abgasauslassöffnung des Hilfsbetriebsabgasrohrs im Windschatten angeordnet werden. Darüber hinaus wird im Stand der Technik versucht, das Hilfsbetriebsabgasrohr, also die Strecke, welche die Abgase von der Hilfsbetriebseinheit zur Abgasauslassöffnung zurücklegen müssen, so kurz wie möglich zu halten.

Jedoch ist es bei Fahrzeugen nicht immer möglich, die negativen Einwirkungen der Luftströmungen durch die zuvor beschriebenen Maßnahmen ausreichend zu minimieren. In diesen Fällen wird gemäß dem Stand der Technik eine Hilfsbetriebseinheit mit einer größeren Leistung eingesetzt. Beispielsweise kann ein größerer Heizbrenner eingesetzt werden. Dieser Heizbrenner ist zwar unempfindlicher gegenüber unterschiedlichen Luftströmungen. Jedoch weist ein leistungsstärkerer Heizbrenner ein höheres Gewicht auf. Des Weiteren ist ein derartiger Heizbrenner in der Regel mit höheren Kosten als Heizbrenner mit geringerer Leistung verbunden.

Es ist daher eine Aufgabe der vorliegenden Erfindung, ein Abgasrohrleitungssystem für ein Fahrzeug, insbesondere Schienenfahrzeug, zur Verfügung zu stellen, welches in einfacher Weise eine ausreichende Betriebszuverlässigkeit einer Hilfsbetriebseinheit gewährleistet.

Die zuvor hergeleitete und aufgezeigte Aufgabe wird gemäß einer ersten Lehre der Erfindung gelöst durch ein Abgasrohrleitungssystem mit den Merkmalen von Patentanspruch 1. Die Aufgabe wird also bei einem Abgasrohrleitungssystem für ein Fahrzeug, insbesondere Schienenfahrzeug, aufweisend zumindest ein mit zumindest einer Kraftstoff verbrauchenden Hauptbetriebseinheit verbundenes Hauptbetriebsabgasrohr, und zumindest ein mit zumindest einer Kraftstoff verbrauchenden Hilfsbetriebseinheit verbundenes Hilfsbetriebsabgasrohr mit einem Endabschnitt und mit zumindest einer Abgasauslassöffnung, wobei die zumindest eine Abgasauslassöffnung des Hilfsbetriebsabgasrohrs in dem Hauptbetriebsabgasrohr angeordnet ist, derart, dass in dem Hilfsbetriebsabgasrohr ein Unterdruck durch eine Abgasströmung im Hauptbetriebsabgasrohr erzeugbar ist, dadurch gelöst, dass das Hauptbetriebsabgasrohr eine Abgasauslassöffnung zur Abführung von Abgasen in die Umgebung aufweist, wobei die Abgasauslassöffnung des Hilfsbetriebsabgasrohrs mit einem vorgebbaren Abstand gegenüber der Abgasauslassöffnung des Hauptbetriebsabgasrohrs angeordnet ist, wobei der Abstand zwischen der Abgasauslassöffuung des Hilfsbetriebsabgasrohrs und der Abgasauslassöffnung des Hauptbetriebsabgasrohrs einen Wert zwischen dem Durchmesser des Hilfsbetriebsabgasrohrs und dem zweifachen Durchmesser des Hilfsbetriebsabgasrohrs aufweist. Der Endabschnitt ist dabei insbesondere ein Rohrabschnitt (Abschnitt bzw. Teil eines Rohres), der mit dem übrigen Hilfsbetriebsabgasrohr einstückig (integral) ausgebildet ist, oder ein separates Rohrstück (Rohrstutzen). Es kann vorgesehen sein, dass der Endabschnitt des Hilfsbetriebsabgasrohrs zumindest teilweise, vorzugsweise vollständig, parallel zum Hauptbetriebsabgasrohr verläuft. Zusätzlich oder alternativ ist denkbar, dass die Austrittsebene der Abgasauslassöffnung parallel zur Austrittsebene des Hauptbetriebsabgasrohres verläuft.

Indem eine Abgasauslassöffnung des Hilfsbetriebsabgasrohrs derart in dem Hauptbetriebsabgasrohr angeordnet wird, also in dem Hauptbetriebsabgasrohr endet (im Hauptbetriebsabgasrohr mündet), dass durch die Abgasströmung im Hauptbetriebsabgasrohr, beispielsweise während des Betriebs der Hauptbetriebseinheit, in dem Hilfsbetriebsabgasrohr ein Unterdruck erzeugt wird, kann unabhängig von äußeren Luftströmungen in einfacher Weise eine ausreichende Betriebszuverlässigkeit einer Hilfsbetriebseinheit gewährleistet werden. Insbesondere wird erfindungsgemäß verhindert, dass ein durch geschwindigkeitsabhängige Strömungsverhältnisse erzeugter Abgasgegendruck an der Abgasauslassöffnung des Hilfsbetriebsabgasrohrs entstehen kann. Hierbei ist eine Abgasauslassöffnung eine Öffnung in einem Rohr, die eine Abführung der Abgase in die Umgebung oder ein anderes Rohr ermöglicht.

Die Abgase der Hauptbetriebseinheit und der Hilfsbetriebseinheit können zusammen über eine Abgasauslassöffnung des Hauptbetriebsabgasrohrs an die Umgebung abgeführt werden. Mit anderen Worten können die von der Hilfsbetriebseinheit erzeugten Abgase mittelbar durch eine in oder an dem Hauptbetriebsabgasrohr angeordneten Abgasauslassöffnung des Hilfsbetriebsabgasrohrs zunächst in das Hauptbetriebsabgasrohr eingeleitet werden. Dann können die Abgase der Hilfsbetriebseinheit über das Hauptbetriebsabgasrohr nach außen abgeführt werden. Es ist keine separate Abgasauslassöffnung an dem Fahrzeug zur unmittelbaren Abführung der Abgase der Hilfsbetriebseinheit nach außen erforderlich.

Eine ausreichende Betriebssicherheit kann unabhängig von der Fahrzeuggeschwindigkeit gewährleistet werden. Gleichzeitig können kostengünstigere Hilfsbetriebseinheiten und/oder längere Hilfsbetriebsabgasrohre und/oder Hilfsbetriebsabgasrohre mit einem geringeren Querschnitt eingesetzt werden.

Es versteht sich, dass ein Hauptbetriebsabgasrohr oder ein Hilfsbetriebsabgasrohr ein Rohrleitungssystem aufweisen kann und insbesondere zwei oder mehrere Teilrohre mit zwei oder mehreren Abgasauslassöffnungen umfassen kann.

Das Hilfsbetriebsabgasrohr kann grundsätzlich in dem Hauptbetriebsabgasrohr mit seiner Abgasauslassöffnung in beliebiger Weise angeordnet sein bzw. enden, sofern ein ausreichender Unterdruck im Hilfsbetriebsabgasrohr durch eine Abgasströmung im Hauptbetriebsabgasrohr erzeugbar ist. Beispielsweise kann die Abgasauslassöffnung bündig mit einer Wand des Hauptbetriebsabgasrohrs angeordnet sein. Alternativ kann gemäß einer ersten Ausgestaltung des Abgasrohrleitungssystems der Erfindung das Hilfsbetriebsabgasrohr zumindest einen Endabschnitt umfassend die Abgasauslassöffnung aufweisen. Der Endabschnitt des Hilfsbetriebsabgasrohrs kann sich in das Hauptbetriebsabgasrohr erstrecken. Mit anderen Worten ragt ein Endabschnitt des Hilfsbetriebsabgasrohrs in das Hauptbetriebsabgasrohr hinein, beispielsweise in Form eines Rohrstutzens. Hierdurch lässt sich in besonders zuverlässiger Weise ein Unterdruck im Hilfsbetriebsabgasrohr erzeugen.

Gemäß einer weiteren Ausgestaltung des Abgasrohrleitungssystems der Erfindung kann die Abgasauslassöffnung in die verlaufsrichtung der Abgasströmung im Hauptbetriebsabgasrohr weisen. Hierdurch kann in einfacher Weise ein Unterdruck im Hilfsbetriebsabgasrohr während des Betriebs sichergestellt werden.

Der Endabschnitt kann sich in beliebiger Weise in das Hauptbetriebsabgasrohr hinein erstrecken, solange ein ausreichender Unterdruck in dem Hauptbetriebsabgasrohr erzeugbar ist. Um die durch die Hauptbetriebseinheit erzeugte Abgasströmung durch das Hauptbetriebsabgasrohr nicht oder zumindest nur in geringer Weise zu beeinträchtigen, kann der Endabschnitt des Hilfsbetriebsabgasrohrs gemäß einer weiteren Ausgestaltung zumindest teilweise parallel zum Hauptbetriebsabgasrohr verlaufen. Insbesondere kann zumindest der Endbereich umfassend die Abgasauslassöffnung des Endabschnitts parallel zum Hauptbetriebsabgasrohr verlaufen. Eine derartige Anordnung des Endabschnitts bringt den Vorteil mit sich, dass der Endabschnitt strömungsoptimiert angeordnet ist.

Ferner können gemäß einer weiteren Ausführungsform der Erfindung die Verlaufsrichtung der Abgasströmung im Hauptbetriebsabgasrohr und die Verlaufsrichtung der Abgasströmung im Hilfsbetriebsabgasrohr zumindest teilweise gleich sein. Bevorzugt können insbesondere zumindest im Endbereich des Hilfsbetriebsabgasrohrs die Verlaufsrichtungen der beiden Abgasströmungen gleich sein.

Der Endabschnitt des Hilfsbetriebsabgasrohrs weist besonders gute Strömungseigenschaften auf, wenn gemäß einer anderen Ausgestaltung des erfindungsgemäßen Abgasrohrleitungssystems eine Mittelachse des Endabschnitts des Hilfsbetriebsabgasrohrs zumindest teilweise identisch, d.h. koaxial, mit der Mittelachse des Hauptbetriebsabgasrohrs ist. Mit anderen Worten kann der Endabschnitt des Hilfsbetriebsabgasrohrs zumindest teilweise zentriert in dem Hauptbetriebsabgasrohr angeordnet sein. Bevorzugt kann zumindest ein Endbereich des Endabschnitts, wobei der Endbereich die Abgasauslassöffnung umfasst, zentriert angeordnet sein.

Um einen ausreichenden Unterdruck im Hilfsbetriebsabgasrohr erzeugen zu können, kann in einer weiteren Ausgestaltung des erfindungsgemäßen Abgasrohrleitungssystems eine Querschnittsfläche des Hauptbetriebsabgasrohrs zumindest dreimal bevorzugt zumindest viermal so groß wie eine Querschnittsfläche des Hilfsbetriebsabgasrohrs sein. Unter der Querschnittsfläche ist insbesondere die innere Querschnittsfläche eines Rohres zu verstehen, also die Fläche, durch die ein Fluid strömen kann. Beispielsweise kann zumindest die Querschnittsfläche des Hauptbetriebsabgasrohrs entsprechend größer als die Querschnittsfläche des Endabschnitts des Hilfsbetriebsabgasrohrs sein. Es versteht sich, dass die Querschnittsflächen darüber hinaus von den produzierten Abgasmengen der Betriebseinheiten abhängen können.

Die Form des Hauptbetriebsabgasrohrs kann grundsätzlich beliebig gebildet sein und beispielsweise eine rechteckförmige, kreisförmige oder elliptische Form aufweisen. Die Form des Hilfsbetriebsabgasrohrs kann auch grundsätzlich beliebig gebildet sein und beispielsweise eine rechteckförmige, kreisförmige oder elliptische Form aufweisen. Sämtlichen Rohrformen können miteinander kombiniert werden, solange vorzugsweise die Querschnittsfläche des Hauptbetriebsabgasrohrs zumindest dreimal insbesondere zumindest viermal so groß wie die Querschnittsfläche des Hilfsbetriebsabgasrohrs ist.

Besonders vorteilhaft können aufgrund der guten Strömungseigenschaften Abgasrohre mit einer kreisförmigen Querschnittsfläche zumindest als Hilfsbetriebsabgasrohr eingesetzt werden. Wenn Abgasrohre mit einer kreisförmigen Querschnittsfläche eingesetzt werden, kann gemäß einer weiteren Ausgestaltung des Abgasrohrleitungssystems der Erfindung ein Durchmesser des Hauptbetriebsabgasrohrs zumindest doppelt so groß, bevorzugt zumindest dreimal so groß wie ein Durchmesser des Hilfsbetriebsabgasrohrs sein. Bei einer derartigen Wahl der Durchmesserverhältnisse kann eine besonders gute Ableitung der Abgase der Hilfs- und Hauptbetriebseinheiten erfolgen.

Bei dem erfindungsgemäßen Abgasrohrleitungssystem weist das Hauptbetriebsabgasrohr eine Abgasauslassöffnung zur Abführung von Abgasen in die Umgebung auf. Die Abgasauslassöffnung des Hilfsbetriebsabgasrohrs ist mit einem vorgebbaren Abstand gegenüber der Abgasauslassöffnung des Hauptbetriebsabgasrohrs angeordnet. Die Abgasauslassöffnung des Hauptbetriebsabgasrohrs zur Abführung von Abgasen in die Umgebung kann auf dem Dach, in einer Seitenwand und/oder im Unterboden des Fahrzeugs angeordnet sein. Um einen ausreichenden Unterdruck im Hilfsbetriebsabgasrohr erzeugen zu können, ist die Abgasauslassöffnungdes Hilfsbetriebsabgasrohrs innerhalb des Hauptbetriebsabgasrohrs mit einem vorgebbaren Abstand angeordnet. Hierdurch kann sichergestellt werden, dass die Abgasströmung, die von der Hauptbetriebseinheit erzeugt wird, die Abgasauslassöffnung des Hilfsbetriebsabgasrohrs derart umströmen kann, dass ein entsprechender Unterdruck im Hilfsbetriebsabgasrohr erzeugt werden kann.

Es ist erkannt worden, dass die Abgasauslassöffnung des Hilfsbetriebsabgasrohrs nicht zu nah zur Abgasauslassöffnung des Hauptbetriebsabgasrohrs angeordnet sein sollte, damit (unabhängig von der Geschwindigkeit des Zuges zu jeder Zeit) ein ausreichender Unterdruck im Hilfsbetriebsabgasrohr erzeugbar ist. Insbesondere ist erkannt worden, dass der vorgebbare Abstand vorteilhafter Weise in Abhängigkeit der Querschnittsflächenverhältnisse der zumindest zwei Abgasrohre gewählt werden sollte. Der Abstand zwischen der Abgasauslassöffnung des Hilfsbetriebsabgasrohrs und der Abgasauslassöffnung des Hauptbetriebsabgasrohrs kann gemäß einer weiteren Ausgestaltung der Erfindung abhängig von der Querschnittsfläche des Hilfsbetriebsabgasrohrs und/oder von der Querschnittsfläche des Hauptbetriebsabgasrohrs sein. Bei Abgasrohren mit einer kreisförmigen Querschnittsfläche kann der Abstand zwischen der Abgasauslassöffnung des Hilfsbetriebsabgasrohrs und der Abgasauslassöffnung des Hauptbetriebsabgasrohrs insbesondere abhängig von dem Durchmesser des Hilfsbetriebsabgasrohrs und/oder von dem Durchmesser des Hauptbetriebsabgasrohrs sein.

Ein ausreichender Unterdruck im Hilfsbetriebsabgasrohr wird dann erzielt, wenn der Abstand zwischen der Abgasauslassöffnung des Hilfsbetriebsabgasrohrs und der Abgasauslassöffnung des Hauptbetriebsabgasrohrs des erfindungsgemäßen Abgasrohrleitungssystems einen Wert zwischen dem Durchmesser des Hilfsbetriebsabgasrohrs und dem zweifachen Durchmesser des Hilfsbetriebsabgasrohrs aufweist. Mit anderen Worten ist der vorgebbare Abstand zumindest gleich dem Durchmesser des Hilfsbetriebsabgasrohrs und kleiner als der doppelte Durchmesser des Hilfsbetriebsabgasrohrs.

Die Hilfsbetriebseinheit kann eine beliebige Kraftstoff verbrauchende Hilfseinheit sein. So kann es sich beispielsweise um einen Hilfsmotor handeln. Besonders vorteilhaft wirkt sich die Erfindung aus, wenn die Hilfsbetriebseinheit eine Heizeinrichtung mit einem Kraftstoff verbrauchenden Brenner ist, da solche Brenner besonders empfindlich gegenüber unterschiedlichen Fahrluftströmungen sind.

Die Aufgabe wird darüber hinaus gemäß einer zweiten Lehre der Erfindung durch ein Schienenfahrzeug enthaltend das zuvor beschriebene Abgasrohrleitungssystem gelöst. Hiermit lassen sich die oben dargelegten Varianten und Vorteile in demselben Maße realisieren, so dass diesbezüglich auf die obigen Ausführungen verwiesen werden soll.

Es gibt nun eine Vielzahl von Möglichkeiten, das erfindungsgemäße Abgasrohrleitungssystem und das erfindungsgemäße Schienenfahrzeug auszugestalten und weiterzubilden. Hierzu sei einerseits verwiesen auf die dem Hauptanspruch nachgeordneten Patentansprüchen, andererseits auf die Beschreibung von Ausführungsbeispielen in Verbindung mit der Zeichnung. In der Zeichnung zeigt:

Fig. 1   eine schematische Ansicht eines Ausführungsbeispiels eines Schienenfahrzeugs gemäß der Erfindung, und

Fig. 2   eine schematische Ansicht eines Ausführungsbeispiels eines Endbereichs eines Abgasrohrleitungssystem gemäß der Erfindung.

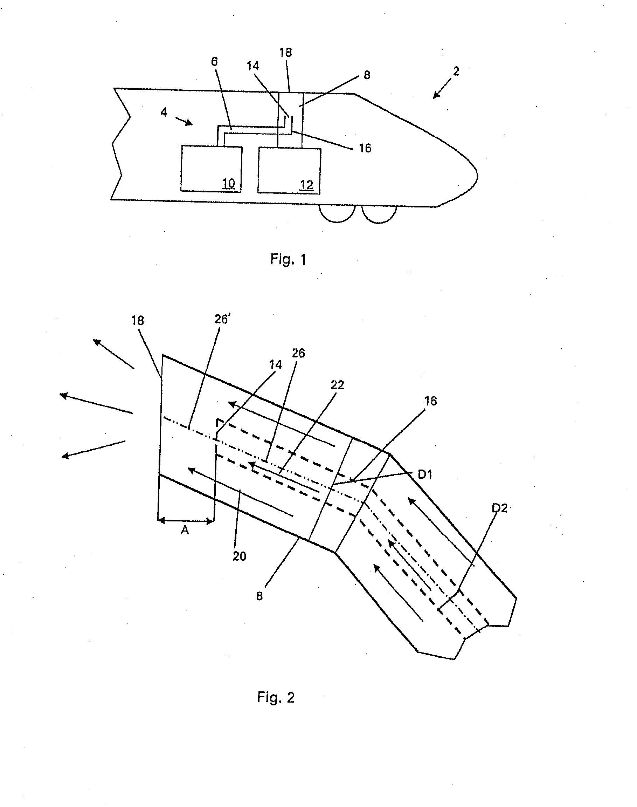

Figur 1 zeigt ein beispielhaftes Schienenfahrzeug 2 gemäß der Erfindung, welches ein beispielhaftes Abgasrohrleitungssystem 4 umfasst.

Das dargestellte Abgasrohrleitungssystem 4 umfasst ein Hauptbetriebsabgasrohr 8, welches mit einer Hauptbetriebseinheit 12 verbunden ist. Bei der Hauptbetriebseinheit 12 kann es sich beispielsweise um einen Fahrmotor des Schienenfahrzeugs 2 handeln. Das vereinfacht dargestellte Hauptbetriebsabgasrohr 8 dient zur Abführung der bei der Verbrennung von Kraftstoff entstehenden Abgase an die Umgebung. Hierfür weist das Hauptbetriebsabgasrohr 8 eine Abgasauslassöffnung 18 auf, durch die die Abgase in die Umgebung gelangen können. Im vorliegenden Beispiel werden die Abgase über das Dach des Schienenfahrzeugs 2 abgeführt. Es versteht sich, dass die Abführung der Abgase alternativ oder zusätzlich auch über die Seiten und/oder den Unterflurbereich des Schienenfahrzeugs 2 erfolgen kann.

Das Hauptbetriebsabgasrohr 8 kann grundsätzlich eine beliebige Form und/oder Länge aufweisen. So kann das Hauptbetriebsabgasrohr 8 einen rechteckigen, kreisförmigen oder elliptischen Querschnitt aufweisen. Die innere, beispielsweise zylinderförmige, Querschnittsfläche des Hauptbetriebsabgasrohrs 8, also die Fläche, die für eine Abführung der Abgase zur Verfügung steht, kann sich insbesondere nach der von der Hauptbetriebseinheit 12 erzeugten Abgasmenge richten. Das Hauptbetriebsabgasrohr 8 kann dementsprechend ausgelegt sein. Beispielsweise kann das Abgasvolumen eines Dieselmotors bis zu ca. 8500 m³/h betragen.

Es versteht sich, dass gemäß anderen Varianten der Erfindung auch zwei oder mehr Hauptbetriebsabgasrohre und/oder zwei oder mehr Hauptbetriebseinheiten vorgesehen sein können.

Neben zumindest einem Hauptbetriebsabgasrohr 8 weist das dargestellte Abgasrohrleitungssystem 4 ein Hilfsbetriebsabgasrohr 6 auf, welches mit einer Hilfsbetriebseinheit 10 verbunden ist. Beispielsweise kann als Hilfsbetriebseinheit 10 eine Heizeinrichtung vorgesehen sein, wie ein Kraftstoff verbrauchender Brenner. Die bei der Verbrennung des Kraftstoffs entstehenden Abgase können über das Hilfsbetriebsabgasrohr 6 abgeführt werden.

Es versteht sich auch hier, dass gemäß anderen Varianten der Erfindung auch zwei oder mehr Hilfsbetriebsabgasrohre und/oder zwei oder mehr Hilfsbetriebseinheiten vorgesehen sein können.

Im Gegensatz zum Stand der Technik führt das Hilfsbetriebsabgasrohr 6 die Abgase jedoch nicht unmittelbar in die Umgebung ab. Das dargestellte Hilfsbetriebsabgasrohr 6 ist mit dem Hauptbetriebsabgasrohr 8 verbunden. Die Abgase der Hilfsbetriebseinheit 10 werden zunächst in das Hauptbetriebsabgasrohr 8, insbesondere in den zylinderförmigen Abschnitt des Hauptbetriebsabgasrohrs, in dem die Abgasauslassöffnung 14 des Hilfsbetriebsabgasrohrs 6 liegt, eingeleitet. Hierbei endet eine Abgasauslassöffnung 14 des Hilfsbetriebsabgasrohrs 6 in dem Hauptbetriebsabgasrohr 8 derart, dass in dem Hilfsbetriebsabgasrohr 6 ein Unterdruck erzeugt werden kann. Insbesondere kann die Abgasauslassöffnung 14 an oder in dem Hauptbetriebsabgasrohr 8 derart angeordnet sein, dass zumindest bei einem Betrieb der Hauptbetriebseinheit 12 (unabhängig von äußeren Bedingungen, wie einer geschwindigkeitsabhängigen Fahrtluftumströmung) vorzugsweise stets ein Unterdruck in dem Hilfsbetriebsabgasrohr 6 erzeugt wird. Hierbei kann der Abgasgegendruck minimiert werden.

Wie der Figur 1 ferner zu entnehmen ist, kann vorzugsweise das Hilfsbetriebsabgasrohr 6 einen Endabschnitt 16 aufweisen, welcher sich in das Hauptbetriebsabgasrohr 8 erstreckt. Mit anderen Worten durchstößt das Hilfsbetriebsabgasrohr 6 das Hauptbetriebsabgasrohr 8 und der Endabschnitt 16 ragt in das Hauptbetriebsabgasrohr 8 hinein. Insbesondere ragt der Endabschnitt zumindest teilweise in Richtung der Abgasströmung der Abgase der Hauptbetriebseinheit hinein.

Das Hilfsbetriebsabgasrohr 6 kann grundsätzlich eine beliebige Form aufweisen. So kann das Hilfsbetriebsabgasrohr 6 einen rechteckigen, kreisförmigen oder elliptischen Querschnitt aufweisen. Die innere Querschnittsfläche des Hilfsbetriebsabgasrohr 6, also die Fläche, die für eine Abführung der Abgase zur Verfügung steht, kann sich insbesondere nach der von der Hilfsbetriebseinheit 10 erzeugten Abgasmenge richten, wobei das Hilfsbetriebsabgasrohr 6 dementsprechend ausgelegt sein kann. Beispielsweise kann das Abgasvolumen von der Leistung eines Brenners abhängen. Beispielhafte Leistungen eines Brenners liegen zwischen 16 bis 30 kW. Bevorzugt können zwei Brenner zur Erhöhung der Leistung zusammen angeordnet werden. Hieraus ergibt sich ein Abgasvolumen von ca. 33 bis 80 m³/h.

Figur 2 zeigt einen beispielhaften Endbereich eines Abgasrohrleitungssystems 4 gemäß der Erfindung.

Wie der Figur 2 zu entnehmen ist, erstreckt sich innerhalb des Hauptbetriebsabgasrohrs 8 ein Endabschnitt 16 eines Hilfsbetriebsabgasrohrs 6. Hierbei weist das Hauptbetriebsabgasrohr 8 eine Abgasauslassöffnung 18 zur Abführung der Abgase in die Umgebung auf. Ferner umfasst der Endabschnitt 16 eine Abgasauslassöffnung 14 zur Einleitung der Abgase der Hilfsbetriebseinheit 10 in das Hauptbetriebsabgasrohr 8. Die Abgasauslassöffnung 14 des Hilfsbetriebsabgasrohrs 6 endet derart in dem Hauptbetriebsabgasrohr 8, dass in dem Hilfsbetriebsabgasrohr 6 ein Unterdruck erzeugbar ist, so dass die durch die Hilfsbetriebseinheit 10 erzeugten Abgase (stets) in einfacher und sicherer Weise zunächst in das Hauptbetriebsabgasrohr 8 eingeführt und dann nach außen abgeführt werden können.

Insbesondere kann der Endabschnitt derart in dem Hauptbetriebsabgasrohr 8 angeordnet sein, dass der Abgasstrom 20 der Hauptbetriebseinheit 12 und der Abgasstrom 22 der Hilfsbetriebseinheit 10 im Wesentlichen parallel zueinander verlaufen und insbesondere der Abgasstrom 22 in paralleler Richtung zum Abgasstrom 20 aus dem Hilfsbetriebsabgasrohr 6 an der Abgasauslassöffnung 14 austritt.

Vorzugsweise kann die Einleitung des Abgasstroms 22 der Hilfsbetriebseinheit 12 über einen strömungsoptimierten Endabschnitt 16 des Hilfsbetriebsabgasrohrs 6 erfolgen. Beispielsweise kann ein Rohrabschnitt- oder -stutzen als Endabschnitt 16 vorgesehen sein, der strömungsoptimiert sein kann.

Für eine derartige strömungsoptimierte Anordnung kann vorgesehen sein, dass der Endabschnitt 16 zumindest teilweise parallel zum Hauptbetriebsabgasrohr 8 verläuft und die Austrittsebene der Abgasauslassöffnung 14 parallel zur Austrittsebene des Hauptbetriebsabgasrohres 8 steht. Nur bei geometrisch gleichen Bedingungen herrschen gleiche Druckverhältnisse an der Austrittsebene. Vorzugsweise kann der Endabschnitt 16 zumindest teilweise zentrisch innerhalb des Hauptbetriebsabgasrohrs 8 angeordnet sein. Beispielsweise kann die Mittelachse 26 des Endabschnitts 16 des Hilfsbetriebsabgasrohrs 6 zumindest teilweise identisch mit der Mittelachse 26' des Hauptbetriebsabgasrohrs 8 sein. Hierdurch kann in besonders einfacher Weise ein Unterdruck in dem Hilfsbetriebsabgasrohr 6 erzeugt und der Abgasgegendruck minimiert werden.

Hierbei kann insbesondere die kinetische Energie des Abgasstroms 20 der Hauptbetriebseinheit genutzt werden, um den Abgasstrom 22 der Hilfsbetriebseinheit (stets) nach außen abzuführen.

Vorteilhafterweise können längere Hilfsbetriebsabgasrohre 6 und/oder Hilfsbetriebsabgasrohre mit geringerem Querschnitt als im Stand der Technik eingesetzt werden.

Ferner ist erkannt worden, dass eine besonders gute Abgasabführung erzielt werden kann, wenn bestimmte Verhältnisse der (inneren) Querschnittsflächen oder (bei kreisförmigen Rohren) bestimmte Verhältnisse der Durchmesser D1, D2 der Abgasrohre 6, 8 zueinander und/oder zum Abstand A der Abgasauslassöffnung 14 zur Abgasauslassöffnung 18 eingehalten werden.

Vorteilhafterweise kann das Verhältnis der Durchmesser D1/D2 ca. 2 bis 3 betragen. Der Abstand A kann bevorzugt

$$A = (1 \ldots 2) * D2$$

sein ("..." steht für jeden Wert zwischen dem Wert 1 und dem Wert 2, z.B. 1,3 oder 1,5 oder 1,8). Es versteht sich, dass grundsätzlich auch andere Werte gewählt werden können, solange die Abgase der Betriebseinheiten 10, 12 in zuverlässiger Weise in die Umgebung abgeführt werden können.

**Patentansprüche**

1. Abgasrohrleitungssystem (4) für ein Fahrzeug, insbesondere Schienenfahrzeug (2), aufweisend

   - zumindest ein mit zumindest einer Kraftstoff verbrauchenden Hauptbetriebseinheit (12) verbundenes Hauptbetriebsabgasrohr (8), und
   - zumindest ein mit zumindest einer Kraftstoff verbrauchenden Hilfsbetriebseinheit (10) verbundenes Hilfsbetriebsabgasrohr (6) mit einem Endabschnitt (16) und mit zumindest einer Abgasauslassöffnung (14),

   wobei die zumindest eine Abgasauslassöffnung (14) des Hilfsbetriebsabgasrohrs (6) in dem Hauptbetriebsabgasrohr (8) angeordnet ist, derart, dass in dem Hilfsbetriebsabgasrohr (6) relativ zum Hauptbetriebsabgasrohr (8) ein Unterdruck durch eine Abgasströmung (20) im Hauptbetriebsabgasrohr (8) erzeugbar ist, dadurch gekennzeichnet, dass das Hauptbetriebsabgasrohr (8) eine Abgasauslassöffnung (18) zur Abführung von Abgasen in die Umgebung aufweist, wobei die Abgasauslassöffnung (14) des Hilfsbetriebsabgasrohrs (6) mit einem vorgebbaren Abstand (A) gegenüber der Abgasauslassöffnung (18) des Hauptbetriebsabgasrohrs (8) angeordnet ist, wobei der Abstand (A) zwischen der Abgasauslassöffnung (14) des Hilfsbetriebsabgasrohrs (6) und der Abgasauslassöffnung (18) des Hauptbetriebsabgasrohrs (8) einen Wert zwischen dem Durchmesser (D2) des Hilfsbetriebsabgasrohrs (6) und dem zweifachen Durchmesser (D2) des Hilfsbetriebsabgasrohrs (6) aufweist.

2. Abgasrohrleitungssystem (4) nach Anspruch 1, **dadurch gekennzeichnet, dass** der Endabschnitt (16) des Hilfsbetriebsabgasrohrs (6) zumindest teilweise parallel zum Hauptbetriebsabgasrohr (8) verläuft.

3. Abgasrohrleitungssystem (4) nach Anspruch 1 oder 2, **dadurch gekennzeichnet, dass** die Austrittsebene der Abgasauslassöffnung (14) parallel zur Austrittsebene des Hauptbetriebsabgasrohres (8) verläuft.

4. Abgasrohrleitungssystem (4) nach einem der vorherigen Ansprüche, **dadurch gekennzeichnet, dass** sich der Endabschnitt (16) des Hilfsbetriebsabgasrohrs (6) in dem Hauptbetriebsabgasrohr (8) erstreckt.

5. Abgasrohrleitungssystem (4) nach einem der vorherigen Ansprüche, **dadurch gekennzeichnet, dass** die Abgasauslassöffnung (14) in die Verlaufsrichtung der Abgasströmung (20) im Hauptbetriebsabgasrohr (8) weist.

6. Abgasrohrleitungssystem (4) nach einem der Ansprüche 2 bis 5, **dadurch gekennzeichnet, dass** die Verlaufsrichtung der Abgasströmung (20) im Hauptbetriebsabgasrohr (8) und die Verlaufsrichtung der Abgasströmung (22) im Hilfsbetriebsabgasrohr (6) zumindest teilweise gleich sind.

7. Abgasrohrleitungssystem (4) nach Anspruch 6, **dadurch gekennzeichnet, dass** eine Mittelachse (26) des Endabschnitts (16) des Hilfsbetriebsabgasrohrs (6) zumindest teilweise identisch mit der Mittelachse (26') des Hauptbetriebsabgasrohrs (8) ist.

8. Abgasrohrleitungssystem (4) nach einem der vorherigen Ansprüche, **dadurch gekennzeichnet, dass** eine Querschnittsfläche des Hauptbetriebsabgasrohrs (8) zumindest dreimal, bevorzugt zumindest viermal so groß wie eine Querschnittsfläche des Hilfsbetriebsabgasrohrs (6) ist.

9. Abgasrohrleitungssystem (4) nach einem der vorherigen Ansprüche, **dadurch gekennzeichnet, dass** ein Durchmesser (D1) des Hauptbetriebsabgasrohrs (8) zumindest doppelt so groß, bevorzugt zumindest dreimal so groß wie ein Durchmesser (D2) des Hilfsbetriebsabgasrohrs (6) ist.

10. Abgasrohrleitungssystem (4) nach einem der vorherigen Ansprüche, **dadurch gekennzeichnet, dass** der Abstand (A) zwischen der Abgasauslassöffnung (14) des Hilfsbetriebsabgasrohrs (6) und der Abgasauslassöffnung (18) des Hauptbetriebsabgasrohrs (8) abhängig von der Querschnittsfläche des Hilfsbetriebsabgasrohrs (6) und/oder von der Querschnittsfläche des Hauptbetriebsabgasrohrs (8) ist.

11. Abgasrohrleitungssystem (4) nach einem der vorherigen Ansprüche, **dadurch gekennzeichnet, dass** der Abstand (A) zwischen der Abgasauslassöffnung (14) des Hilfsbetriebsabgasrohrs (6) und der Abgasauslassöffnung (18) des Hauptbetriebsabgasrohrs (8) abhängig von dem Durchmesser (D1) des Hauptbetriebsabgasrohrs (8) ist.

12. Abgasrohrleitungssystem (4) nach einem der vorherigen Ansprüche, **dadurch gekennzeichnet, dass** die Hilfsbetriebseinheit (10) eine Heizeinrichtung mit einem Kraftstoff verbrauchenden Brenner ist.

13. Schienenfahrzeug (2) mit einem Abgasrohrleitungssystem (4) nach einem der vorherigen Ansprüche.

**Claims**

1. An exhaust gas pipe system (4) for a vehicle, particularly a rail vehicle (2), featuring

    - at least one main operating exhaust pipe (8) that is connected to at least one fuel-consuming main operating unit (12), and
    - at least one auxiliary operating exhaust pipe (6) that is connected to at least one fuel-consuming auxiliary operating unit (10) and has an end section (16), as well as at least one exhaust gas outlet opening (14),

    wherein the at least one exhaust gas outlet opening (14) of the auxiliary operating exhaust pipe (6) is arranged in the main operating exhaust pipe (8) in such a way that a negative pressure relative to the main operating exhaust pipe (8) can be generated in the auxiliary operating exhaust pipe (6) by an exhaust gas flow (20) in the main operating exhaust pipe (8), **characterized in that** the main operating exhaust pipe (8) features an exhaust gas outlet opening (18) for discharging exhaust gases into the surroundings, wherein the exhaust gas outlet opening (14) of the auxiliary operating exhaust pipe (6) is arranged at a predefined distance (A) from the exhaust gas outlet opening (18) of the main operating exhaust pipe (8), wherein the distance (A) between the exhaust gas outlet opening (14) of the auxiliary operating exhaust pipe (6) and the exhaust gas outlet opening (18) of the main operating exhaust pipe (8) has a value between the diameter (D2) of the auxiliary operating exhaust pipe (6) and twice the diameter (D2) of the auxiliary operating exhaust pipe (6).

2. The exhaust gas pipe system (4) according to Claim 1, **characterized in that** the end section (16) of the auxiliary operating exhaust pipe (6) extends at least partially parallel to the main operating exhaust pipe (8).

3. The exhaust gas pipe system (4) according to Claim 1 or 2, **characterized in that** the exit plane of the exhaust gas outlet opening (14) extends parallel to the exit plane of the main operating exhaust pipe (8).

4. The exhaust gas pipe system (4) according to one of the preceding claims, **characterized in that** the end section (16) of the auxiliary operating exhaust pipe (6) extends in the main operating exhaust pipe (8).

5. The exhaust gas pipe system (4) according to one of the preceding claims, **characterized in that** the exhaust gas outlet opening (14) points in the direction of the exhaust gas flow (20) in the main operating exhaust pipe (8).

6. The exhaust gas pipe system (4) according to one of Claims 2 to 5, **characterized in that** the direction of the exhaust gas flow (20) in the main operating exhaust pipe (8) and the direction of the exhaust gas flow (22) in the auxiliary operating exhaust pipe (6) are at least partially identical.

7. The exhaust gas pipe system (4) according to Claim 6, **characterized in that** a center axis (26) of the end section (16) of the auxiliary operating exhaust pipe (6) is at least partially identical to the center axis (26') of the main operating exhaust pipe (8).

8. The exhaust gas pipe system (4) according to one of the preceding claims, **characterized in that** a cross-sectional area of the main operating exhaust pipe (8) is at least three-times as large, preferably at least four-times as large, as a cross-sectional area of the auxiliary operating exhaust pipe (6).

9. The exhaust gas pipe system (4) according to one of the preceding claims, **characterized in that** a diameter (D1) of the main operating exhaust pipe (8) is at least twice as large, preferably at least three-times as large, as a diameter (D2) of the auxiliary operating exhaust pipe (6).

10. The exhaust gas pipe system (4) according to one of the preceding claims, **characterized in that** the distance (A) between the exhaust gas outlet opening (14) of the auxiliary operating exhaust pipe (6) and the exhaust gas outlet opening (18) of the main operating exhaust pipe (8) is dependent on the cross-sectional area of the auxiliary operating exhaust pipe (6) and/or on the cross-sectional area of the main operating exhaust pipe (8).

11. The exhaust gas pipe system (4) according to one of the preceding claims, **characterized in that** the distance (A) between the exhaust gas outlet opening (14) of the auxiliary operating exhaust pipe (6) and the exhaust gas outlet opening (18) of the main operating exhaust pipe (8) is dependent on the diameter (D1) of the main operating exhaust pipe (8).

12. The exhaust gas pipe system (4) according to one of the preceding claims, **characterized in that** the auxiliary operating unit (10) is a heating device with a fuel-consuming burner.

13. A rail vehicle (2) with an exhaust gas pipe system (4) according to one of the preceding claims.

## Revendications

1. Système de conduites de gaz d'échappement (4) pour véhicule, en particulier véhicule ferroviaire (2), présentant

    - au moins un tuyau d'échappement de fonctionnement principal (8) relié à au moins une unité de fonctionnement principal (12) consommant du carburant et
    - au moins un tuyau d'échappement de fonctionnement auxiliaire (6) relié à au moins une unité de fonctionnement auxiliaire (10) consommant du carburant et comportant une section terminale (16) et au moins une ouverture de sortie de gaz d'échappement (14), l'au moins une ouverture de sortie de gaz d'échappement (14) du tuyau d'échappement de fonctionnement auxiliaire (6) étant disposée dans le tuyau d'échappement de fonctionnement principal (8) de manière à ce qu'une dépression puisse être générée dans le tuyau d'échappement de fonctionnement auxiliaire (6) par rapport au tuyau d'échappement de fonctionnement principal (8) par un flux de gaz d'échappement (20) dans le tuyau d'échappement de fonctionnement principal (8), **caractérisé en ce que** le tuyau d'échappement de fonctionnement principal (8) présente une ouverture de sortie de gaz d'échappement (18) pour évacuer des gaz d'échappement dans l'environnement, l'ouverture de sortie de gaz d'échappement (14) du tuyau d'échappement de fonctionnement auxiliaire (6) étant disposée à une distance prédéfinissable (A) par rapport à l'ouverture de sortie de gaz d'échappement (18) du tuyau d'échappement de fonctionnement principal (8), la distance (A) entre l'ouverture de sortie de gaz d'échappement (14) du tuyau d'échappement de fonctionnement auxiliaire (6) et l'ouverture de sortie de gaz d'échappement (18) du tuyau d'échappement de fonctionnement principal (8) ayant une valeur comprise entre le diamètre (D2) du tuyau d'échappement de fonctionnement auxiliaire (6) et le double du diamètre (D2) du tuyau d'échappement de fonctionnement auxiliaire (6).

2. Système de conduites de gaz d'échappement (4) selon la revendication 1, **caractérisé en ce que** la section terminale (16) du tuyau d'échappement de fonctionnement auxiliaire (6) s'étend au moins partiellement parallèlement au tuyau d'échappement de fonctionnement principal (8).

3. Système de conduites de gaz d'échappement (4) selon la revendication 1 ou 2, **caractérisé en ce que** le plan de sortie de l'ouverture de sortie de gaz d'échappement (14) s'étend parallèlement au plan de sortie du tuyau d'échappement de fonctionnement principal (8).

4. Système de conduites de gaz d'échappement (4) selon une des revendications précédentes, **caractérisé en ce que** la section terminale (16) du tuyau d'échappement de fonctionnement auxiliaire (6) s'étend dans le tuyau d'échappement de fonctionnement principal (8).

5. Système de conduites de gaz d'échappement (4) selon une des revendications précédentes, **caractérisé en ce que** l'ouverture de sortie de gaz d'échappement (14) est dirigée dans le sens de circulation du flux de gaz d'échappement (20) dans le tuyau d'échappement de fonctionnement principal (8).

6. Système de conduites de gaz d'échappement (4) selon une des revendications 2 à 5, **caractérisé en ce que** le sens de circulation du flux de gaz d'échappement (20) dans le tuyau d'échappement de fonctionnement principal (8) et le sens de circulation du flux de gaz d'échappement (22) dans le tuyau d'échappement de fonctionnement auxiliaire (6) sont au moins partiellement identiques.

7. Système de conduites de gaz d'échappement (4) selon la revendication 6, **caractérisé en ce qu'**un axe médian (26) de la section terminale (16) du tuyau d'échappement de fonctionnement auxiliaire (6) est au moins partiellement identique à l'axe médian (26') du tuyau d'échappement de fonctionnement principal (8).

8. Système de conduites de gaz d'échappement (4) selon une des revendications précédentes, **caractérisé en ce qu'**une section transversale du tuyau d'échappement de fonctionnement principal (8) représente de préférence trois fois, de préférence au moins quatre fois, la section transversale du tuyau d'échappement de fonctionnement auxiliaire (6).

9. Système de conduites de gaz d'échappement (4) selon une des revendications précédentes, **carac-**

**térisé en ce qu'**un diamètre (D1) du tuyau d'échappement de fonctionnement principal (8) représente au moins le double, de préférence au moins le triple, d'un diamètre (D2) du tuyau d'échappement de fonctionnement auxiliaire (6).

10. Système de conduites de gaz d'échappement (4) selon une des revendications précédentes, **caractérisé en ce que** la distance (A) entre l'ouverture de sortie de gaz d'échappement (14) du tuyau d'échappement de fonctionnement auxiliaire (6) et l'ouverture de sortie de gaz d'échappement (18) du tuyau d'échappement de fonctionnement principal (8) dépend de la section transversale du tuyau d'échappement de fonctionnement auxiliaire (6) et/ou de la section transversale du tuyau d'échappement de fonctionnement principal (8).

11. Système de conduites de gaz d'échappement (4) selon une des revendications précédentes, **caractérisé en ce que** la distance (A) entre l'ouverture de sortie de gaz d'échappement (14) du tuyau d'échappement de fonctionnement auxiliaire (6) et l'ouverture de sortie de gaz d'échappement (18) du tuyau d'échappement de fonctionnement principal (8) dépend du diamètre (D1) du tuyau d'échappement de fonctionnement principal (8).

12. Système de conduites de gaz d'échappement (4) selon une des revendications précédentes, **caractérisé en ce que** l'unité de fonctionnement auxiliaire (10) est un dispositif de chauffage comportant un brûleur consommant du carburant.

13. Véhicule ferroviaire (2) doté d'un système de conduites de gaz d'échappement (4) selon une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010062755 A1
- DE 102006017123 A1